# EUROPÄISCHE PATENTSCHRIFT

(11) **EP 1 095 209 B1**
(45) Veröffentlichungstag und Bekanntmachung des Hinweises auf die Patenterteilung: **17.12.2003**
(21) Anmeldenummer: 00927124.8
(22) Anmeldetag: 03.05.2000
(51) Int. Cl.: F01M 13/04, F01M 13/02

(54) **ÖLABSCHEIDER ZUR ENTÖLUNG VON KURBELGEHÄUSE-ENTLÜFTUNGSGASEN EINER BRENNFRAFTMASCHINE**
OIL SEPARATOR FOR DEOILING CRANKCASE VENTILATION GASES OF AN INTERNAL COMBUSTION ENGINE
SEPARATEUR D'HUILE POUR DESHUILER LES GAZ DE VENTILATION DU CARTER DE VILEBREQUIN D'UN MOTEUR A COMBUSTION INTERNE

(30) Priorität: 06.05.1999 DE 29908116 U
(43) Veröffentlichungstag der Anmeldung: 02.05.2001
(73) Patentinhaber: Hengst GmbH & Co. KG, 48147 Münster (DE)
(72) Erfinder: BUSEN, Jürgen, D-48683 Ahaus (DE); PIETSCHNER, Sieghard, D-48268 Greven (DE)
(74) Vertreter: Schulze Horn, Kathrin
(86) Internationale Anmeldenummer: EP0003940
(87) Internationale Veröffentlichungsnummer: WO00068548

(56) Entgegenhaltungen:
- DE-A- 1 900 827
- DE-A- 3 128 470
- DE-A- 4 344 507
- DE-A- 19 838 247
- DE-U- 1 900 827
- FR-A- 2 745 335

## Beschreibung

Die vorliegende Erfindung betrifft einen Ölabscheider zur Entölung von Kurbelgehäuse-Entlüftungsgasen einer Brennkraftmaschine, wobei der Ölabscheider mindestens einen Zyklon umfaßt, der einen mit dem Kurbelgehäuse der Brennkraftmaschine verbundenen Gaseinlaß, einen mit dem Luftansaugtrakt der Brennkraftmaschine verbundenen Gasauslaß und einen mit dem Ölsumpf der Brennkraftmaschine verbundenen Ölauslaß aufweist, wobei der Gasauslaß als Tauchrohr durch einen den Zyklon oben abschließenden Deckel in den Zyklon-Innenraum hineinragt , wobei über dem Gasauslaß oberhalb des Deckels ein Gasleitungsabschnitt mit sprunghaft auf mindestens das Doppelte vergrößertem Querschnitt vorgesehen ist und wobei aus dem Gasleitungsabschnitt sich dort ansammelndes Öl zum Ölauslaß oder zum Ölsumpf rückführbar ist.

Ein Ölabscheider der eingangs genannten Art ist aus DE-A-31 28 470 bekannt. Weiter ist bei diesem bekannten Ölabscheider vorgesehen, daß das Innere des Tauchrohrs, durch das der gereinigte Gasstrom den Zyklon verläßt, gleichzeitig zur Ableitung von Öl aus dem oberhalb des Deckels des Zyklons Tiegenderi Gasle-itungsabsc-hnitt-dient. Damit das Öl aus diesem Gasleitungsabschnitt in das Innere des Tauchrohrs gelangen und durch dieses nach unten abströmen kann, endet das Tauchrohr mit seiner Oberkante in Höhe der Unterseite des Deckels, so daß ein stufenfreies Überströmen von Öl von der Oberfläche des Deckels in das Innere des Tauchrohrs möglich ist.

Nachteilig ist bei diesem bekannten Stand der Technik, daß das durch das Innere des Tauchrohrs nach unten strömende Öl von der das Tauchrohr in entgegengesetzter Richtung durchfließenden Gasströmung mitgerissen und so in unerwünschter Weise dem Luftansaugtrakt der Brennkraftmaschine zugeführt werden kann. Gasströmungen mit einer entsprechend hohen Strömungsgeschwindigkeit innerhalb des Tauchrohrs entstehen im Betrieb einer zugehörigen Brennkraftmaschine immer dann, wenn relativ große Mengen an Kurbelgehäuseentlüftungsgas anfallen.

Ein weiterer Ölabscheider ist aus DE-C-42 14 324 bekannt. Das bei diesem Ölabscheider als Gasauslaß dienende Tauchrohr setzt sich oberhalb des den Zyklon oben abschließenden Deckels stetig als Gasleitung, die zum Luftansaugtrakt der Brennkraftmaschine führt, fort. Als nachteilig wird bei diesem bekannten Ölabscheider angesehen, daß es im Betrieb noch zu einer Mitnahme von Rest-Ölanteilen in Richtung zum Gasauslaß kommt, was mit der Zeit zu einer zunehmend dicken Ölablagerung auf der inneren Oberfläche des Gasauslasses führt. Wenn eine gewisse Dicke dieser Ölablagerung erreicht ist und wenn ausreichend hohe Gasströmungsgeschwindigkeiten auftreten, können Teile des Öls wieder in den Reingasstrom gelangen. Die vom Reingasstrom mitgenommenen Ölmengen gelangen zwangsläufig in den Luftansaugtrakt der Brennkraftmaschine, was unerwünscht ist, da hierdurch die Gemischzusammensetzung für die Brennkraftmaschine negativ beeinflußt wird.

Für die vorliegende Erfindung stellt sich deshalb die Aufgabe, einen Ölabscheider der eingangs genannten Art zu schaffen, der die dargelegten Nachteile vermeidet und bei dem sichergestellt ist, daß das im Gasleitungsabschnitt oberhalb des Deckels abgesetzte Öl sicher zum Ölauslaß oder zum Ölsumpf zurückgeführt wird, ohne daß es vom Reingasstrom zum Luftansaugtrakt der Brennkraftmaschine mitgenommen werden kann.

Die Lösung dieser Aufgabe gelingt erfindungsgemäß durch einen Ölabscheider der eingangs genannten Art, der dadurch gekennzeichnet ist, daß das Tauchrohr kurz oberhalb des Deckels endet und daß von der Oberseite des Deckels ausgehend aus dem Gasleitungsabschnitt ein Ölableitkanal getrennt vom Tauchrohr nach unten zum Ölauslaß oder zum Ölsumpf geführt ist.

Mit der erfindungsgemäßen Gestaltung des Ölabscheiders wird erreicht, daß sich eventuell noch in dem Gas, das durch den Gasauslaß aus dem Zyklon strömt, befindliche Öltröpfchen im Bereich des im Querschnitt vergrößerten Gasleitungsabschnitts an dessen Oberflächen niederschlagen und von dort unter Schwerkraftwirkung zum Ölableitkanal fließen. Durch den Ölableitkanal wird das Öl entweder unmittelbar zum Ölsumpf der Brennkraftmaschine oder zuerst zum Ölauslaß und von dort zusammen mit dem schon im Zyklon abgeschiedenen Öl zum Ölsumpf der Brennkraftmaschine geleitet. Das kurz über dem Deckel endende Tauchrohr bildet mit seinem oberen Endbereich einen nach oben über den Deckel vorragenden Kragen, der ein Einfließen von Öl in das Innere des Tauchrohrs verhindert. Da der Ölableitkanal einen vom Tauchrohr getrennten Kanal bildet, kann der Reingasström, der durch das Tauchrohr den Zyklon verläßt, das abgeschiedene Öl nicht mitreißen und deshalb auch nicht in unerwünschter Weise in den Ansaugtrakt der Brennkraftmaschine mitnehmen. Mit dem erfindungsgemäßen Ölabscheider wird erreicht, daß der Ölabscheidegrad besonders hoch wird und daß weder Ölnebel noch gelegentliche größere Öltropfen in den Luftansaugtrakt der Brennkraftmaschine gelangen. Dies wirkt sich positiv auf die Abgaswerte der Brennkraftmaschine aus und minimiert den Ölverbrauch der Brennkraftmaschine, so daß seltener Öl nachgefüllt werden muß.

Um eine unerwünschte, von unten nach oben durch den Ölableitkanal verlaufende Gasströmung zu vermeiden, ist vorgesehen, daß das untere Ende des Öläbleitkanals mit einem Siphon oder Rückschlagventil ausgeführt ist.

In weiterer Ausgestaltung des Ölabscheiders ist vorgesehen, daß zur Bildung des Gasleitungsabschnitts auf dem Deckel eine unten zumindest dessen Durchmesser aufweisende, glocken- oder trichterförmige Haube angeordnet ist, deren oberes, engeres Ende offen und als Anschlußende zur Verbindung mit dem Ansaugtrakt der Brennkraftmaschine ausgeführt ist. Bei dieser Ausgestaltung des Ölabscheiders ergibt sich einerseits die gewünschte Funktion und andererseits eine einfache Bauweise, die eine Konstruktion des Ölabscheiders aus relativ wenigen und unkomplizierten Einzelteilen ermöglicht.

Um eine gezielte und wirkungsvolle Ölableitung aus dem Bereich oberhalb des Deckels zu gewährleisten, ist vorgesehen, daß um den Deckel herum eine ringförmige Eintiefung verläuft oder daß der Deckel oberseitig eine Eintiefung und/oder ein Gefälle aufweist und daß der Ölableitkanal in der Eintiefung oder an der tiefsten Stelle des Gefälles beginnt. Durch diese Nläßnahme wird das Öl gezielt gesammelt und abgeleitet, wobei sichergestellt ist, daß es nicht in den Bereich von hohen Gasströmungsgeschwindigkeiten gelangt, wo es von dem strömenden Gas mitgerissen werden könnte.

Hinsichtlich des Tauchrohres ist bevorzugt vorgesehen, daß dieses mit einem sich in Gasströmungsrichtung vergrößernden Querschnitt, vorzugsweise konisch, ausgeführt ist. Durch diese Formgebung wird einerseits ein hoher Ölabscheidegrad des Zyklons erreicht und andererseits eine Verringerung der Gasströmungsgeschwindigkeit am oberen Ende des Tauchrohres bewirkt, was günstig für die Restölabscheidung oberhalb des Tauchrohres in dem Gasleitungsabschnitt mit dem vergrößerten Querschnitt ist.

Weiter ist bevorzugt vorgesehen, daß der Ölauslaß mit einem unter dem Zyklon angeordneten Ölsammeltrichter ausgeführt ist und daß das untere Ende des Ölableitkanals in den Ölsammeltrichter mündet. Durch diese Maßnahme wird auf eine einfache Weise eine Zusammenführung der beiden Ölströme einerseits aus dem am unteren Ende des Zyklons liegenden Ölauslaß und andererseits aus dem in dessen Nachbarschaft endenden Ölableitkanal erreicht. Die weitere Rückführung bis zum ölsumpf der Brennkraftmaschine kann dann über eine einzige und gemeinsame Ölleitung erfolgen.

Der Ölabscheider gemäß der eingangs zitierten DE 42 14 324 C2 besitzt einen einzelnen Zyklon zur Abscheidung des Öls aus dem Kurbelgehäuse-Entlüftungsgas. Abweichend davon kann es aber zur Verbesserung des Wirkungsgrades des Ölabscheider bei unterschiedlichen und schwankenden Betriebszuständen der Brennkraftmaschine zweckmäßig sein, den Ölabscheider mit zwei oder mehr Zyklonen auszuführen. Für eine solche Ausführung sieht die vorliegende Erfindung bevorzugt vor, daß die Haube die Deckel und die Tauchrohre aller Zyklone überdeckt und daß ein einziger Ölableitkanal vorhanden ist. Auf diese Weise wird eine kompakte Bauweise mit wenigen und relativ einfach geformten Einzelteilen des Ölabscheiders erreicht, was die Herstellungs- und Montagekosten niedrig hält.

Zwei Ausführungsbeispiele der Erfindung werden im folgenden anhand einer Zeichnung erläutert. Die Figuren der Zeichnung zeigen:
- Figur 1: einen Ölabscheider mit einem Zyklon, im Vertikalschnitt, und
- Figur 2: einen Ölabscheider mit mehreren Zyklonen, ebenfalls im Vertikalschnitt.

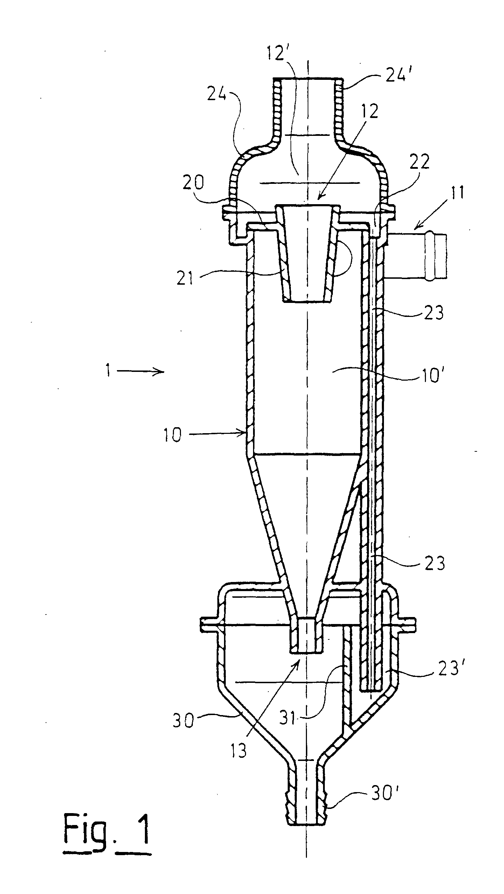

Bei dem in der Figur 1 gezeigten Ausführungsbeispiel handelt es sich um einen Ölabscheider 1 mit einem einzelnen Zyklon 10. Der Zyklon 10 besitzt, wie üblich und bekannt, ein in seinem oberen Teil zylindrisches Gehäuse, das nach unten trichterförmig enger wird. Am oberen Ende des Zyklons 10 mündet ein Gaseinlaß 11 tangential in den Innenraum 10' des Zyklons 10 ein. Nach oben hin ist der Zyklon 10 durch einen Deckel 20 abgeschlossen, in den ein Tauchrohr 21 als Gasauslaß 12 eingesetzt ist. Im Betrieb des Ölabscheiders 1 gelangt durch den Gaseinlaß 11 Kurbelgehäuseentlüftungsgas einer Brennkraftmaschine in den Innenraum 10' des Zyklons 10 und wird in diesem in eine schraubenlinienförmige Drehströmung versetzt, in welcher die mitgeführten Öltröpfchen infolge von Zentrifugalkräften nach außen getragen werden und sich an der Innenwand des Zyklons 10 niederschlagen. Der von den Ölbestandteilen zum größten Teil befreite Gasstrom wird am unteren Ende des Tauchrohres 21 nach oben umgelenkt und strömt durch das den Gasauslaß 12 bildende Tauchrohr 21 nach oben hin ab.

Das Tauchrohr 21 endet schon kurz oberhalb der Oberseite des Deckels 20, wo sich ein Gasleitungsabschnitt 12' mit sprunghaft vergrößertem Querschnitt anschließt. Dieser Gasleitungsabschnitt 12' wird durch eine Haube 24 gebildet, deren unterer Rand mit einem am oberen Ende des Zyklons 10 vorgesehenen Ansatz gasdicht verbunden ist. Nach oben hin wird die Haube 24 glockenförmig enger und endet oben in einem Anschlußende 24', das zur Verbindung mit einer weiterführenden Gasleitung dient, die zum Luftansaugtrakt der zugehörigen Brennkraftmaschine führt.

Durch die Vergrößerung des Querschnitts im Bereich des Gasleitungsabschnitts 12' wird erreicht, daß sich noch im den Gasauslaß 12 verlassenden Gasstrom befindliche Ölanteile an der Innenseite der Haube 24 niederschlagen und an dieser entlang nach Erreichen einer entprechend großen Olschichtdicke unter Schwerkraftwirkung nach unten strömen. Zur Sammlung des nach unten strömenden Öls ist oberseitig am Zyklon 10 eine dessen Deckel 20 umgebende ringförmige Eintiefung 22 vorgesehen. Von der in der Zeichnung rechten Seite der Eintiefung 22 führt ein Ölableitkanal 23 nach unten bis in die Nähe des Ölauslasses 13 des Zyklons 10.

Der Ölauslaß 13 am unteren Ende des Zyklons 10 und das untere Ende des Ölableitkanals 23 laufen gemeinsam in einen geschlossenen Ölsammeltrichter 30. Dessen unteres Ende 30' ist als Anschluß für eine weiterführende Ölleitung ausgeführt, die das im Ölsammeltrichter 30 gesammelte Öl aus dem Zyklon 10 und aus dem Ölableitkanal 23 gemeinsam zum Ölsumpf der Brennkraftmaschine führt.

Um eine unerwünschte Gasströmung von unten nach oben durch den Ölableitkanal 23 zu vermeiden, ist dessen unteres Ende in Form eines Syphons 23' ausgebildet. Bei dem Ausführungsbeispiel des Ölabscheiders 1 gemäß Figur 1 ist hierzu im Ölsammeltrichter 30 eine Trennwand 31 vorgesehen, die an ihrer Oberkante einen Übertritt von Öl aus dem Ölableitkanal 23 in den übrigen Teil des Ölsammeltrichters 30 erlaubt und die gleichzeitig mit ihrer Oberkante oberhalb des unteren Endes des Ölableitkanals 23 liegt.

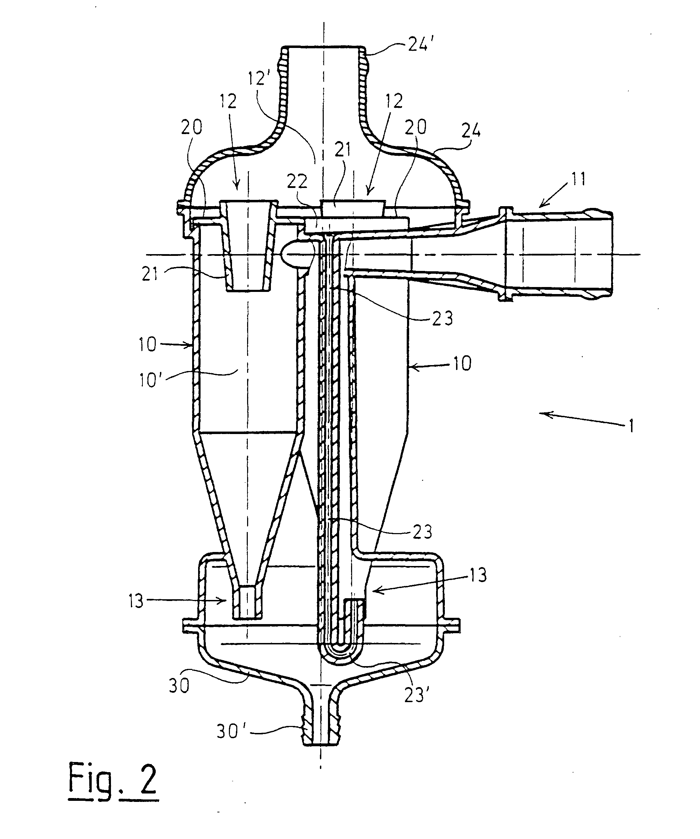

Bei dem in Figur 2 gezeigten Ausführungsbeispiel handelt es sich um einen Ölabscheider 1 mit mehreren, hier drei Zyklonen 10. Aufgrund der Darstellung des Ölabscheiders 1 im Vertikalschnitt ist rechts im Hintergrund der erste Zyklon 10 in Ansicht erkennbar, während links der zweite Zyklon 10 im Schnitt sichtbar ist. Der dritte Zyklon liegt deckungsgleich mit dem ersten Zyklon 10 oberhalb der Schnittebene der Zeichnung und ist deshalb hier nicht sichtbar.

Die einzelnen Zyklone 10 sind in ihrer Form und Funktion in Übereinstimmung mit dem Ausführungsbeispiel gemäß Figur 1 ausgeführt. Dabei verzweigt sich ein gemeinsamer Gaseinlaß 11 auf die einzelnen Zyklone 10. Außerdem besitzt jeder einzelne Zyklon 10 oberseitig einen Deckel 20 mit einem darin eingesetzten Tauchrohr 21 als Gasauslaß 12.

Weiterhin umfaßt der Ölabscheider 1 gemäß Figur 2 eine Haube 24, die die Deckel 20 und Tauchrohre 21 aller drei Zyklone 10 überdeckt. Das an der Innenseite der Haube 24 niedergeschlagene Öl läuft unter Schwerkraftwirkung nach unten auf die Oberseite der Deckel 20 und von dort in eine zentral liegende Eintiefung 22. Von dieser Eintiefung 22 verläuft ein Ölableitkanal 23 nach unten in die Nähe der Ölauslässe 13 der Zyklone 10.

Am unteren Ende des Ölabscheiders 1 ist ein für alle Zyklone 10 gemeinsamer Ölsammeltrichter 30 angeordnet, in den auch das untere Ende des Ölableitkanals 23 mündet. Zur Vermeidung einer dem Ölstrom im Ölableitkanal 23 entgegengerichteten Gasströmung ist dieser an seinem unteren Ende mit einem U-förmig nach oben gebogenen Abschnitt zur Bildung eines Syphons 23' ausgeführt. Das untere Ende 30' des Ölsammeltrichters 30 ist auch hier wieder als Anschluß für eine zum Ölsumpf der Brennkraftmaschine führende Ölleitung ausgeführt.

## Patentansprüche

1. Ölabscheider (1) zur Entölung von Kurbelgehäuse-Entlüftungsgasen einer Brennkraftmaschine, wobei der Ölabscheider (1) mindestens einen Zyklon (10) umfaßt, der einen mit dem Kurbelgehäuse der Brennkraftmaschine verbundenen Gaseinlaß (11), einen mit dem Luftansaugtrakt der Brennkraftmaschine verbundenen Gasauslaß (12) und einen mit dem Ölsumpf der Brennkraftmaschine verbundenen Ölauslaß (13) aufweist, wobei der Gasauslaß (12) als Tauchrohr (21) durch einen den Zyklon (10) oben abschließenden Deckel (20) in den Zyklon-Innenraum (10') hineinragt , wobei über dem Gasauslaß (12) oberhalb des Deckels (20) ein Gasleitungsabschnitt (12') mit sprunghaft auf mindestens das Doppelte vergrößertem Querschnitt vorgesehen ist und wobei aus dem Gasleitungsabschnitt (12') sich dort ansammelndes Öl zum Ölauslaß (13) oder zum Ölsumpf rückführbar ist,
**dadurch gekennzeichnet,**
**daß** das Tauchrohr (21) kurz oberhalb des Deckels (20) endet und daß von der Oberseite des Deckels (20) ausgehend aus dem Gasleitungsabschnitt (12') ein Ölableitkanal (23) getrennt vom Tauchrohr(21) nach unten . zum ölauslaß (13) oder zum Ölsumpf geführt ist.

2. Ölabscheider nach Ansprüch 1, dädurch **gekennzeichnet**, daß das untere Ende des Ölableitkanals (23) mit einem Siphon (23') oder Rückschlagventil ausgeführt ist.

3. Ölabscheider nach Anspruch 1 oder 2, **dadurch gekennzeichnet, daß** zur Bildung des Gasleitungsabschnitts (12') auf dem Deckel (20) eine unten zumindest dessen Durchmesser aufweisende, glocken- oder trichterförmige Haube (24) angeordnet ist, deren oberes, engeres Ende (24' ) offen und als Anschlußende zur Verbindung mit dem Ansaugtrakt der Brennkraftmaschine ausgeführt ist.

4. Ölabscheider nach einem der vorhergehenden Ansprüche, **dadurch gekennzeichnet, daß** um den Deckel (20) herum eine ringförmige Eintiefung (22) verläuft oder daß der Deckel (20) oberseitig eine Eintiefung (22) und/oder ein Gefälle aufweist und daß der Ölableitkanal (23) in der Eintiefung (22) oder an der tiefsten Stelle des Gefälles beginnt.

5. Ölabscheider nach einem der vorhergehenden Ansprüche, **dadurch gekennzeichnet, daß** das Tauchrohr (21) mit einem sich in Gasströmungsrichtung vergrößernden Querschnitt, vorzugsweise konisch, ausgeführt ist.

6. Ölabscheider nach einem der vorhergehenden Ansprüche, **dadurch gekennzeichnet, daß** der Ölauslaß (13) mit einem unter dem Zyklon (10) angeordneten Ölsammeltrichter (30) ausgeführt ist und daß das untere Ende des Ölableitkanals (23) in den Ölsammeltrichter (30) mündet.

7. Ölabscheider nach einem der Ansprüche 3 bis 6, wobei dieser zwei oder mehr Zyklone (10) umfaßt, **dadurch gekennzeichnet, daß** die Haube (24) die Deckel (20) und die Tauchrohre (21) aller Zyklone (10) überdeckt und daß ein einziger Ölableitkanal (23) vorhanden ist.

## Claims

1. Oil separator (1) for the deoiling of crankcase ventilation gases of a combustion engine, with the oil separator (1) comprising at least one cyclone (10) that is equipped with a gas inlet (11) connected to the crankcase of the combustion engine, a gas outlet (12) connected to the air intake section of the combustion engine, and an oil outlet (13) connected to the oil pan of the combustion engine, wherein the gas outlet (12), as an inner pipe (21), projects through a cover (20) that closes the cyclone (10) on the top and into the interior region (10') of the cyclone, wherein a gas line section (12') with a cross-section that is increased to twice its size in a step is provided above the cover (20) over the gas outlet (12) and wherein, from the gas line section (12'), oil that is accumulating therein can be returned to the oil outlet (13) or the oil pan,
**characterized in that**
the inner pipe (21) ends shortly above the cover (20) and, starting at the upper side of the cover (20), an oil discharge duct (23) is routed down to the oil outlet (13) or the oil pan, separately from the inner pipe (21).

2. Oil separator according to Claim 1, **characterized in that** the lower end of the oil discharge duct (23) is provided with a siphon (23') or a check valve.

3. Oil separator according to Claim 1 or 2, **characterized in that**, in order to form the gas line section (12'), a hood (24) having the shape of a bell or a funnel and, at its lower end, at least same in diameter as the cover (20) is arranged thereon, with the upper and narrower end (24') being open and being designed as a connection end to be connected to the intake section of the combustion engine.

4. Oil separator according to anyone of the preceding claims, **characterized in that** a ringshaped recess (22) is arranged around the cover (20) or that the cover (20) is provided with a recess (22) and/or a slope on its upper side and that the oil discharge duct (23) starts in the recess (22) or at the lowest point of the slope.

5. Oil separator according to anyone of the preceding claims, **characterized in that** the inner pipe (21) is provided with a cross-section that increases, preferrably conically, in the direction of the gas flow.

6. Oil separator according to anyone of the preceding claims, **characterized in that** the oil outlet (13) is provided with an oil collection funnel (30) arranged beneath the cyclone (10) and that the lower end of the oil discharge duct (23) ends in the oil collection funnel (30).

7. Oil separator according to anyone of the Claims 3 through 6, with the oil separator comprising two or more cyclones (10), **characterized in that** the hood (24) covers the covers (20) and the inner pipes (21 ) of all cyclones (10) and that there exists a single oil discharge duct (23).

## Revendications

1. Séparateur d'huile (1) pour le déshuilage des gaz s'échappant du carter d'un moteur à combustion interne ; le séparateur d'huile (1) étant composé d'au moins un cyclone (10) qui comporte une admission des gaz (11) reliée au carter du moteur à combustion interne, un échappement des gaz (12) relié à l'aspiration d'air du moteur à combustion interne ainsi qu'une sortie d'huile (13) reliée au carter d'huile du moteur à combustion interne ; l'échappement des gaz (12) pénétrant à l'intérieur du cyclone (10') sous la forme d'un tube plongeur (21) par un couvercle (20) qui obture le haut du cyclone (10); une section de conduite de gaz (12'), dotée d'une section transversale brusquement agrandie au moins du double, étant située au-dessus de l'échappement des gaz (12), au-dessus du couvercle (20) et de l'huile accumulée au niveau de cette section de conduite de gaz (12') en s'en écoulant pouvant être amenée vers la sortie d'huile (13) ou le carter d'huile,
**caractérisé en ce que**
l'extrémité du tube plongeur (21) aboutit juste au-dessus du couvercle (20) et qu'un canal de dérivation d'huile (23), séparé du tube plongeur (21), partant de la section de la conduite de gaz (12'), depuis le dessus du couvercle (20), se déploie vers le bas jusqu'à la sortie d'huile (13) ou le carter d'huile.

2. Séparateur d'huile selon la revendication 1, **caractérisé en ce que** l'extrémité inférieure du canal de dérivation d'huile (23) est équipée d'un siphon (23') ou d'un clapet antiretour.

3. Séparateur d'huile selon la revendication 1 ou 2, **caractérisé en ce que**, pour former la section de la conduite de gaz (12'), un capot en forme de cloche ou de trémie (24) dont le bas a au moins son diamètre et dont l'extrémité supérieure étroite (24') est ouverte et conçue comme extrémité de raccord pour faire la liaison avec l'aspiration du moteur à combustion interne, surmonte le couvercle (20).

4. Séparateur d'huile selon l'une des revendications précédentes, **caractérisé en ce qu'**un évidement annulaire (22) suit le pourtour du couvercle (20) ou **en ce que** le dessus du couvercle (20) est doté d'un évidement (22) et/ou d'une inclinaison et **en ce que** le canal de dérivation d'huile (23) part de l'évidement (22) ou du point le plus profond de l'inclinaison.

5. Séparateur d'huile selon l'une des revendications précédentes, **caractérisé en ce que** le tube plongeur (21) est réalisé avec une section transversale, de préférence conique, qui s'élargit dans le sens du flux de gaz.

6. Séparateur d'huile selon l'une des revendications précédentes, **caractérisé en ce que** la sortie d'huile (13) est réalisée avec une trémie collectrice d'huile (30) située en dessous du cyclone (10) et **en ce que** l'extrémité inférieure du canal de dérivation d'huile (23) débouche dans la trémie collectrice d'huile (30).

7. Séparateur d'huile selon l'une des revendications 3 à 6, celui-ci comprenant deux cyclones ou plus (10), **caractérisé en ce que** le capot (24) recouvre le couvercle (20) et les tubes plongeurs (21) de tous les cyclones (10) et qu'un seul canal de dérivation d'huile (23) est utilisé.
